(19) **Europäisches Patentamt**

**European Patent Office**

**Office européen des brevets**

(11) **EP 1 099 047 B1**

(12) **EUROPÄISCHE PATENTSCHRIFT**

(45) Veröffentlichungstag und Bekanntmachung des Hinweises auf die Patenterteilung:
**25.09.2002 Patentblatt 2002/39**

(51) Int Cl.⁷: **F01N 3/20**, F01N 3/28, F01N 3/08, B01D 53/94, B01D 53/90, B01D 53/32

(21) Anmeldenummer: **00920568.3**

(22) Anmeldetag: **24.03.2000**

(86) Internationale Anmeldenummer:
**PCT/EP00/02623**

(87) Internationale Veröffentlichungsnummer:
**WO 00/071868 (30.11.2000 Gazette 2000/48)**

(54) **ABGASREINIGUNGSANLAGE MIT INTERNER AMMONIAKERZEUGUNG ZUR STICKOXIDREDUKTION**

EXHAUST GAS CLEANING SYSTEM HAVING INTERNAL AMMONIA PRODUCTION FOR REDUCING NITROGEN OXIDES

INSTALLATION DE PURIFICATION DE GAZ D'ECHAPPEMENT A PRODUCTION INTERNE D'AMMONIAC POUR LA REDUCTION DES OXYDES D'AZOTES

(84) Benannte Vertragsstaaten:
**DE FR GB IT**

(30) Priorität: **19.05.1999 DE 19922960**

(43) Veröffentlichungstag der Anmeldung:
**16.05.2001 Patentblatt 2001/20**

(73) Patentinhaber: **DaimlerChrysler AG**
**70567 Stuttgart (DE)**

(72) Erfinder:
• **BÖGNER, Walter**
**D-71686 Remseck (DE)**
• **HARTWEG, Martin**
**D-89155 Erbach (DE)**
• **KONRAD, Brigitte**
**D-89134 Blaustein (DE)**
• **KRUTZSCH, Bernd**
**D-73770 Denkendorf (DE)**
• **WEIBEL, Michel**
**D-70619 Stuttgart (DE)**
• **WENNINGER, Günter**
**D-70599 Stuttgart (DE)**

(56) Entgegenhaltungen:
EP-A- 0 802 315          DE-A- 19 510 804
US-A- 3 767 764

**Beschreibung**

Die Erfindung bezieht sich auf eine Abgasreinigungsanlage zur Reinigung des Abgases einer Verbrennungsquelle wenigstens von darin enthaltenen Stickoxiden nach dem Oberbegriff des Anspruchs 1.

Abgasreinigungsanlagen dieser Art werden insbesondere zur Abgasreinigung bei Kraftfahrzeug-Verbrennungsmotoren verwendet und sind z.B. in den Offenlegungsschriften EP 0 802 315 A2 und WO 97/17532 A1 beschrieben. Sie beinhalten einen Stickoxidreduktionskatalysator zur selektiven katalytischen Reduktion von im emittierten Abgas der Verbrennungsquelle enthaltenen Stickoxiden unter Verwendung von Ammoniak als Reduktionsmittel, abgekürzt als SCR-Verfahren bezeichnet. Um den Ammoniak oder ein Vorläuferprodukt nicht als Vorrat in einem Tank bereithalten zu müssen, ist dem Stickoxidreduktionskatalysator ein Ammoniakerzeugungskatalysator vorgeschaltet, der den benötigten Ammoniak unter Verwendung von Bestandteilen wenigstens eines Teils des von der Verbrennungsquelle emittierten Abgases während entsprechender Ammoniakerzeugungs-Betriebsphasen intern erzeugt, speziell durch eine Synthesereaktion von Wasserstoff und Stickstoffmonoxid. In diesen Ammoniakerzeugungs-Betriebsphasen wird für das dem Ammoniakerzeugungskatalysator zugeführte Abgas ein fettes Luftverhältnis eingestellt, um ausreichend Wasserstoff zur Verfügung zu haben. Unter fettem und magerem Luftverhältnis, auch Lambdawert genannt, wird hierbei wie üblich eine von der stöchiometrischen Zusammensetzung in Richtung kraftstoffreich bzw. sauerstoffreich abweichende Zusammensetzung des Abgases bzw. des zugehörigen, in der Verbrennungsquelle verbrannten Brennstoffgemischs verstanden. Dabei wird unter anderem schon aus Kraftstoffverbrauchsgründen angestrebt, die Verbrennungsquelle möglichst viel im Magerbetrieb und möglichst wenig im Fettbetrieb zu betreiben, z.B. dadurch, daß längere Magerbetriebsphasen mit kurzzeitigen Fettbetriebsphasen abwechseln oder im Fall einer mehrzylindrigen Brennkraftmaschine nur ein Teil der Zylinder bevorzugt ebenfalls nur zeitweise fett, die übrigen Zylinder dagegen kontinuierlich mager betrieben werden.

Als Ammoniakerzeugungskatalysator wird üblicherweise ein Dreiwegekatalysator eingesetzt, der als Katalysatormaterial z.B. Pt und/oder Rh auf einem $\gamma$-$Al_2O_3$-Träger beinhaltet, das geeignet ist, die Synthesereaktion von Wasserstoff und Stickstoffmonoxid zu Ammoniak zu katalysieren. Es zeigt sich jedoch, daß ohne weitere Maßnahmen die Selektivität für eine effektive Ammoniakbildung durch diese Synthesereaktion erst bei ausreichend hoher Temperatur in der Größenordnung ab etwa 250°C bis 300°C gegeben ist. Dies liegt vor allem daran, daß die Selektivität dieser katalytischen Ammoniaksynthesereaktion erst ab dieser Temperatur auf einen für die Praxis brauchbaren Wert ansteigt.

Der Erfindung liegt als technisches Problem die Bereitstellung einer Abgasreinigungsanlage der eingangs genannten Art zugrunde, bei der im Ammoniakerzeugungskatalysator Ammoniak auch schon bei relativ niedrigen Temperaturen unterhalb von etwa 250°C bis 300°C in nennenswerten Mengen synthetisiert werden kann und als Reduktionsmittel zur Stickoxidreduktion zur Verfügung steht.

Die Erfindung löst dieses Problem durch die Bereitstellung einer Abgasreinigungsanlage mit den Merkmalen des Anspruchs 1. Diese Anlage beinhaltet charakteristischerweise einen dem Ammoniakerzeugungskatalysator vorgeschalteten Plasmagenerator. Von diesem wird wenigstens zeitweise während der Ammoniakerzeugungs-Betriebsphasen ein Plasma generiert, durch welches das anschließend dem Ammoniakerzeugungskatalysator zugeführte Abgas hindurchgeleitet wird. Die Plasmaerzeugungsparameter werden dabei so eingestellt, daß aus Bestandteilen des hindurchgeleiteten Abgases reaktive Teilchen, wie H-, OH- und/oder $O_2$H-Radikale, gebildet werden, welche die Ammoniakerzeugungsreaktion im Ammoniakerzeugungskatalysator fördern. Damit kann speziell im niedrigen Temperaturbereich, in welchem die Ammoniaksynthesereaktion aus den Abgasbestandteilen ohne weitere Hilfsmittel nicht effektiv abläuft, bereits Ammoniak in merklicher Menge intern erzeugt werden, der dann zur Stickoxidreduktion zur Verfügung steht. Eine externe Zudosierung von Ammoniak oder eines Vorläuferprodukts in diesen Zeiträumen mit relativ niedriger Ammoniakerzeugungskatalysatortemperatur kann daher im allgemeinen entfallen, ohne daß auf eine effektive, ammoniakbasierte Stickoxidreduktion verzichtet werden muß.

Bei einer nach Anspruch 2 weitergebildeten Abgasreinigungsanlage sind Mittel zur Erfassung der Ammoniakerzeugungskatalysatortemperatur und eine Plasmasteuereinheit dergestalt vorgesehen, daß während der Ammoniakerzeugungs-Betriebsphasen das Plasma zur Erzeugung reaktiver Teilchen genau in den Zeiträumen bereitgestellt wird, in denen die Temperatur des Ammoniakerzeugungskatalysators unterhalb eines vorgebbaren Temperaturschwellwertes liegt. Dieser ist zweckmäßigerweise so gewählt, daß bei Temperaturen über dem Schwellwert eine effektive Ammoniaksynthese im Ammoniakerzeugungskatalysator auch ohne die plasmatechnisch erzeugten reaktiven Teilchen bewirkt wird. In einer weiteren, bevorzugten Ausgestaltung dieser Maßnahme ist die betreffende Plasmasteuereinheit auf einen Temperaturschwellwert zwischen 200°C und 300°C ausgelegt, vorzugsweise auf einen solchen von etwa 250°C. Es zeigt sich, daß unterhalb dieses Temperaturbereichs eine effektive plasmagestützte Ammoniaksynthese und oberhalb dieses Temperaturbereichs eine effektive Ammoniaksynthese schon ohne zusätzliche Plasmaaktivierung bewirkt werden kann.

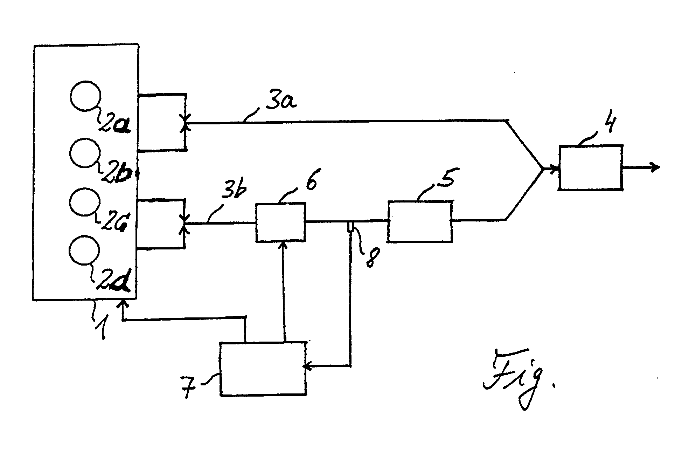

Eine vorteilhafte Ausführungsform der Erfindung ist in der Zeichnung dargestellt und wird nachfolgend beschrieben.

Die einzige Figur zeigt ein schematisches Blockdiagramm einer Brennkraftmaschine mit zugeordneter Abgasreinigungsanlage.

Die gezeigte Abgasreinigungsanlage dient zur Reinigung des Abgases einer Verbrennungsquelle in Form eines Vierzylinder-Verbrennungsmotors 1, wie er insbesondere in Kraftfahrzeugen als überwiegend mager betriebene Brennkraftmaschine einsetzbar ist. Von den vier Zylindern 2a bis 2d sind ein erster und zweiter Zylinder 2a, 2b parallel an einen ersten Abgasleitungszweig 3a und ein dritter und vierter Zylinder 2c, 2d an einen zum ersten parallelen zweiten Abgasleitungszweig 3b angeschlossen. Beide Abgasleitungszweige 3a, 3b münden gemeinsam in einen Stickoxidreduktionskatalysator 4. Im zweiten Abgasleitungszweig 3b ist stromaufwärts des Stickoxidreduktionskatalysators 4 ein Ammoniakerzeugungskatalysator 5 angeordnet. Dieser kann z.B. von einem Dreiwegekatalysator gebildet sein, der ein Pt-und/oder Rh-Katalysatormaterial auf einem $\gamma$-$Al_2O_3$-Trägermaterial beinhaltet, das in der Lage ist, bei ausreichend hoher Temperatur die Synthese von Ammoniak aus Wasserstoff und Stickstoffmonoxid gemäß der Reaktionsgleichung

$$5/2 \cdot H_2 + NO \rightarrow NH_3 + H_2O$$

zu katalysieren. Wenn keine anderweitigen Maßnahmen getroffen werden, läßt sich damit Ammoniak bei Temperaturen von mindestens etwa 250°C bis 300°C mit ausreichender Selektivität synthetisieren. Der Ammoniak kann dann im Stickoxidreduktionskatalysator 4 als Stickoxidreduktionsmittel eingesetzt werden.

Um auch bei niedrigeren Temperaturen unterhalb von etwa 250°C bis 300°C schon merkliche Mengen an Ammoniak zur Stickoxidreduktion bereitstellen zu können, ist dem Ammoniakerzeugungskatalysator 5 im zweiten Abgasleitungszweig 3b ein Plasmagenerator 6 vorgeschaltet. Mit dem Plasmagenerator 6 kann an der betreffenden Stelle im zweiten Abgasleitungszweig 3b ein Plasma gezündet werden, durch welches das vom dritten und vierten Zylinder 2c, 2d der Brennkraftmaschine 1 emittierte, über den zweiten Abgasleitungszweig 3b geführte Abgas vor Erreichen des Ammoniakerzeugungskatalysators 5 hindurchgeleitet wird. Die Plasmaparameter werden so gewählt, daß aus im durchströmenden Abgas enthaltenen Bestandteilen reaktive Teilchen, insbesondere Radikale, gebildet werden, welche die Ammoniaksynthesereaktion im nachfolgenden Ammoniakerzeugungskatalysator 5 begünstigen, wie H-, OH- und $O_2H$-Radikale. Der Plasmagenerator 6 wird von einer Plasmasteuereinheit angesteuert, die im gezeigten Beispiel von einem Motorsteuergerät 7 gebildet ist, das zusätzlich die Brennkraftmaschine 1 und die übrigen Komponenten der Abgasreinigungsanlage nach herkömmlichen Steuerungsprinzipien steuert.

Dabei kann der Plasmagenerator 6 von der Plasmasteuereinheit 7 in Abhängigkeit von der Temperatur des Ammoniakerzeugungskatalysators 5 gesteuert werden. Zur Erfassung der Ammoniakerzeugungskatalysatortemperatur ist im zweiten Abgasleitungszweig 3b zwischen Plasmagenerator 6 und Ammoniakerzeugungskatalysator 5 ein Temperatursensor 8 vorgesehen, der die Temperatur des dortigen Abgasstroms mißt, die ein eindeutiges Maß für die Temperatur des von diesem Abgasstrom aufgeheizten Ammoniakerzeugungskatalysators 5 ist. Es versteht sich, daß alternativ die Ammoniakerzeugungskatalysatortemperatur auch auf andere Weise erfaßt werden kann, z.B. durch einen Temperatursensor direkt im Ammoniakerzeugungskatalysator 5 oder durch eine indirekte Abgastemperaturbestimmung aus den Betriebsparametern der Brennkraftmaschine 1.

Mit dem gezeigten Aufbau läßt sich folgende vorteilhafte Betriebsweise für die Brennkraftmaschine 1 und die zugehörige Abgasreinigungsanlage realisieren. Die Brennkraftmaschine 1 wird schon aus Kraftstoffverbrauchsgründen möglichst viel im Magerbetrieb gefahren. Dazu können die beiden ersten Zylinder 2a, 2b kontinuierlich mit magerem Luft/Kraftstoff-Gemisch, d.h. mit Luft/Kraftstoff-Verhältnissen $\lambda$ größer als der stöchiometrische Wert eins, betrieben werden. Dementsprechend liegt das Luftverhältnis $\lambda$ des von diesen beiden Zylindern 2a, 2b in den ersten Abgasleitungszweig 3a emittierten Abgases über dem stöchiometrischen Wert eins. Eine solche Abgaszusammensetzung weist neben überschüssigem Sauerstoff in der Regel auch eine erhöhte Menge an Stickoxiden auf. Um diese im Stickoxidreduktionskatalysator 4 wirksam durch selektive katalytische Reduktion mit Ammoniak als Reduktionsmittel umsetzen zu können, wird über den zweiten Abgasleitungszweig 3b der benötigte Ammoniak im laufenden Betrieb erzeugt.

Dazu werden der dritte und vierte Zylinder 2c, 2d wenigstens zeitweise in entsprechenden Ammoniakerzeugungs-Betriebsphasen mit einem fetten Luft/Kraftstoff-Gemisch betrieben. Dementsprechend liegt das Luftverhältnis $\lambda$ des von diesen Zylindern 2c, 2d in den zweiten Abgasleitungszweig 3b emittierten Abgases unter dem stöchiometrischen Wert eins. Eine solche Abgaszusammensetzung enthält neben unverbrannten Kohlenwasserstoffen zusätzlich auch Wasserstoff und eine gewisse Menge Stickoxide. Je nach der anhand einer Abgastemperaturmessung durch den Temperatursensor 8 oder auf andere Weise ermittelten Temperatur im Ammoniakerzeugungskatalysator 5 wird der Plasmagenerator 6 ein- und ausgeschaltet.

Speziell bleibt der Plasmagenerator 6 abgeschaltet, solange die Ammoniakerzeugungskatalysatortemperatur über einem vorgegebenen Temperaturschwellwert liegt, der vorzugsweise auf ca. 250°C, allgemein auf einen geeigneten Wert z.B. im Bereich zwischen 200°C und 300°C festgesetzt wird. Der jeweils fallabhängig am besten geeignete Temperatursollwert kann an der Plasmasteuereinheit eingestellt werden. In diesem höheren Temperaturbereich durchquert der angefettete Abgasstrom im zweiten Abgasleitungszweig 3b unbeeinflußt den Plasmagenerator 6 und gelangt in den Ammoniakerzeugungskatalysator 5, in welchem aus den Abgasbestandteilen Wasserstoff und Stickstoffmonoxid gemäß der obigen Synthesereaktion Ammoniak erzeugt wird. Bei diesen Temperaturen von mehr als etwa 250°C bis 300°C läuft die Synthesereaktion mit hoher Selektivität unter der katalytischen Wirkung des dortigen Katalysatormaterials und damit sehr effektiv ab. Der erzeugte Ammoniak gelangt mit dem Abgasstrom des zweiten Abgasleitungszweiges 3b zum Stickoxidreduktionskatalysator 4, wo er als Reduktionsmittel zur selektiven katalytischen Reduktion der Stickoxide wirkt, die in den beiden, dem Stickoxidreduktionskatalysator 4 zugeführten Abgasteilströmen der parallelen Abgasleitungszweige 3a, 3b enthalten sind. Bei dieser Reduktionsreaktion werden die Stickoxide zu Stickstoff unter Bildung von Wasser reduziert.

Wenn während der Ammoniakerzeugungs-Betriebsphase die Ammoniakerzeugungskatalysatortemperatur unterhalb des vorgegebenen Schwellwertes liegt, wird der Plasmagenerator 6 durch die Plasmasteuereinheit 7 aktiv betrieben. Das vom dritten und vierten Zylinder 2c, 2d in den zweiten Abgasleitungszweig 3b emittierte Abgas durchquert dann im Plasmagenerator 6 das gezündete Plasma, wodurch die erwähnten reaktiven Teilchen, vor allem H-, OH- und/oder $O_2$H-Radikale, gebildet werden, die mit dem Abgasstrom zum Ammoniakerzeugungskatalysator 5 gelangen und dort bewirken, daß die Ammoniaksynthesereaktion trotz der bei diesen niedrigen Temperaturen noch niedrigen Selektivität bezüglich Ammoniakbildung schon in einem Maß abläuft, das zur Bereitstellung einer für die nachfolgende Stickoxidreduktion im Stickoxidreduktionskatalysator 4 genügenden Ammoniakmenge ausreicht. Sobald dann durch den weiteren Betrieb der Brennkraftmaschine 1 die Abgastemperatur über den Temperaturschwellwert ansteigt, schaltet die Plasmasteuereinheit 7 den Plasmagenerator 6 ab.

Je nach Anwendungsfall wechseln beim Betrieb des dritten und vierten Zylinders 2c, 2d und der zugehörigen Abgasreinigungskomponenten im zweiten Abgasleitungszweig 3b die beschriebenen Ammoniakerzeugungs-Betriebsphasen, in denen eine fette Abgaszusammensetzung für das den Ammoniakerzeugungskatalysator 5 durchströmende Abgas eingestellt wird, mit Magerbetriebsphasen ab, in denen diese beiden Zylinder 2c, 2d mit magerem Luft/Kraftstoff-Gemisch betrieben werden, oder es erfolgt kontinuierlich der beschriebene Ammoniakerzeugungsbetrieb. Wenn der dritte und der vierte Zylinder 2c, 2d wenigstens zeitweise auch im Magerbetrieb gefahren werden, hält die Plasmasteuereinheit 7 den Plasmagenerator 6 in diesen Magerbetriebsphasen abgeschaltet. Der nachgeschaltete Dreiwegekatalysator 5 dient während der Magerbetriebsphasen nicht primär der Ammoniaksynthese, sondern erfüllt vorrangig seine für einen Dreiwegekatalysator übliche Abgasreinigungsfunktion zur Reinigung eines mageren Abgasstroms. Ein solcher zeitweiser Magerbetrieb des in Fettbetriebsphasen Ammoniak erzeugenden Systemteils ist insbesondere dann möglich, wenn eine Ammoniakspeicherkomponente vorhanden ist, z.B. dadurch, daß der Ammoniakerzeugungskatalysator 5 oder der Stickoxidreduktionskatalysator 4 eine gewissen Ammoniakspeicherfähigkeit besitzen oder ein zusätzlicher Ammoniakspeicher, z.B. in Form eines Ammoniakadsorptionskatalystors, zwischen dem Ammoniakerzeugungskatalysator 5 und dem Stickoxidreduktionskatalysator 4 angeordnet ist. In diesem Fall wird das System so ausgelegt, daß der ammoniakerzeugende Systemteil in den Ammoniakerzeugungs-Betriebsphasen mehr Ammoniak erzeugt als zur gleichen Zeit für die Stickoxidreduktion benötigt wird, so daß der überschüssige Ammoniak zwischengespeichert werden kann und in einer anschließenden Magerbetriebsphase des ammoniakerzeugenden Systemteils zur kontinuierlichen Stickoxidreduktion zur Verfügung steht.

Als eine weitere Variante kann in herkömmlicher Weise ein Systembetrieb mit wechselnden Stickoxidadsorptions- und Stickoxiddesorptionsphasen vorgesehen sein, wozu die Abgasreinigungsanlage dann wenigstens einen entsprechenden Stickoxidadsorber an geeigneter Stelle im Abgasstrang aufweist, z.B. vor oder hinter dem Ammoniakerzeugungskatalysator 5 oder in einem zu dessen Abgasleitungszweig parallelen Abgasleitungszweig.

Es versteht sich, daß sich die erfindungsgemäße Kombination von Ammoniakerzeugungskatalysator und vorgeschaltetem, abgastemperaturabhängig steuerbarem Plasmagenerator außer für das gezeigte Beispiel auch für Systeme mit einer anderen instationären oder stationären Verbrennungsquelle mit zugehörigem, aus einem oder mehreren parallelen Teilsträngen bestehendem Abgasstrang anwenden läßt. Des weiteren versteht sich, daß die Abgasreinigungsanlage in nicht gezeigter Weise je nach Bedarf weitere herkömmliche Abgasreinigungskomponenten beinhalten kann.

In allen Fällen ermöglicht es die Erfindung, wie anhand der oben erwähnten Beispiele deutlich wird, im Abgas einer Brennkraftmaschine oder einer beliebigen anderen instationären oder stationären Verbrennungsquelle enthaltene Stickoxide durch selektive katalytische Reduktion mit intern erzeugtem Ammoniak als Reduktionsmittel in einem breiten Abgastemperaturbereich zwischen etwa 200°C und etwa 500°C oder allgemeiner zwischen etwa 150°C und etwa 700°C umzusetzen, wobei es in der Regel nicht notwendig ist, Ammoniak oder ein Vorläuferprodukt, wie z.B. Harnstoff, in einem Vorratstank bereitzuhalten.

**Patentansprüche**

1. Abgasreinigungsanlage zur Reinigung des von einer Verbrennungsquelle, insbesondere eines Kraftfahrzeug-Verbrennungsmotors, emittierten Abgases wenigstens von darin enthaltenen Stickoxiden mit

   - einem Ammoniakerzeugungskatalysator 5) zur Erzeugung von Ammoniak unter Verwendung von Bestandteilen wenigstens eines Teils des von der Verbrennungsquelle (1) emittierten Abgases während Ammoniakerzeugungs-Betriebsphasen und
   - einem dem Ammoniakerzeugungskatalysator nachgeschalteten Stickoxidreduktionskatalysator (4) zur Reduktion von im emittierten Abgas der Verbrennungsquelle enthaltenen Stickoxiden unter Verwendung des erzeugten Ammoniaks als Reduktionsmittel,

   **gekennzeichnet durch**

   - einen dem Ammoniakerzeugungskatalysator (5) vorgeschalteten Plasmagenerator (6) zur plasmatechnischen Erzeugung von die Ammoniakerzeugungsreaktion im Ammoniakerzeugungskatalysator fördernden, reaktiven Teilchen aus Bestandteilen des dem Ammoniakerzeugungskatalysator zugeführten Abgases während der Ammoniakerzeugungs-Betriebsphasen.

2. Abgasreinigungsanlage nach Anspruch 1, weiter **gekennzeichnet durch**

   - Mittel (8) zur Ermittlung der Temperatur des Ammoniakerzeugungskatalysators (5) und
   - eine Plasmasteuereinheit (7), welche den Plasmagenerator (6) aktiviert hält, wenn die ermittelte Ammoniakerzeugungskatalysatortemperatur unterhalb eines vorgebbaren Temperaturschwellwertes liegt, und sie deaktiviert hält, wenn die ermittelte Ammoniakerzeugungskatalysatortemperatur oberhalb des vorgebbaren Temperaturschwellwertes liegt.

3. Abgasreinigungsanlage nach Anspruch 2, weiter **dadurch gekennzeichnet, daß** die Plasmasteuereinheit (7) auf einen Temperaturschwellwert zwischen 200°C und 300°C, vorzugsweise etwa 250°C, ausgelegt ist.

**Claims**

1. Exhaust gas purification system for removing at least nitrous oxides from exhaust gas emissions from a combustion source, in particular an internal combustion engine, having

   - an ammonia-generating catalyst (5) for generating ammonia using constituents of at least a part of the exhaust gas emitted from the combustion source (1) during ammonia-generating operating phases and
   - a nitrous oxide-reducing catalyst (4) connected downstream of an ammonia-generating catalyst for reducing nitrous oxides contained in the exhaust gas emitted from the combustion source using the generated ammonia as a reducing agent,

   **characterised by**

   - a plasma generator (6) connected upstream of the ammonia-generating catalyst (5) for generating reactive particles to promote the ammonia-generating reaction in the ammonia-generating catalyst, by plasma technology, from constituents of the exhaust gas delivered to the ammonia-generating catalyst during the ammonia-generating operating phases.

2. Exhaust gas purification system as claimed in claim 1, additionally **characterised by**

   - means for detecting the temperature of the ammonia-generating catalyst (5) and
   - a plasma control unit (7), which keeps the plasma generator (6) activated if the detected temperature of the ammonia-generating catalyst lies below a predeterminable temperature threshold value and deactivates it if the detected temperature of the ammonia-generating catalyst lies above the predeterminable temperature threshold value.

3. Exhaust gas purification system as claimed in claim 2, additionally **characterised in that** the plasma control unit (7) is designed to operate at a temperature threshold value of between 200° and 300°C, preferably approximately 250°C.

**Revendications**

1. Dispositif de purification de gaz d'échappement pour la purification des gaz d'échappement émis par une source de combustion, en particulier un moteur à combustion interne de véhicule automobile d'au moins les oxydes d'azote contenus dans ceux-ci avec

- un catalyseur de production d'ammoniac (5) pour la production d'ammoniac en utilisant des constituants d'au moins une partie des gaz d'échappement émis par la source de combustion (1) pendant les phases de fonctionnement de production d'ammoniac et
- un catalyseur de réduction d'oxydes d'azote (4) raccordé en aval du catalyseur de production d'ammoniac pour la réduction d'oxydes d'azote contenus dans des gaz d'échappement émis par la source de combustion en utilisant l'ammoniac produit comme agent de réduction,

**caractérisé par**

- un générateur de plasma (6) raccordé en amont du catalyseur de production d'ammoniac (5) pour la production par la technique du plasma de particules réactives permettant la réaction de production d'ammoniac dans le catalyseur de production d'ammoniac à partir de constituants des gaz d'échappement introduits dans le catalyseur de production d'ammoniac pendant les phases de fonctionnement de la production d'ammoniac.

2. Dispositif de purification de gaz d'échappement selon la revendication 1, **caractérisé en outre par**

- un moyen (8) pour saisir la température du catalyseur de production d'ammoniac (5) et
- une unité de commande de plasma (7), laquelle maintient le générateur de plasma (6) activé, lorsque la température du catalyseur de production d'ammoniac obtenue est inférieure à une valeur seuil de température prédéterminée, et le maintient désactivé lorsque la température du catalyseur de production d'ammoniac obtenue est supérieure à la valeur seuil de température prédéterminée.

3. Dispositif de purification de gaz d'échappement selon la revendication 2, **caractérisé en outre en ce que** l'unité de commande de plasma (7) est conçue pour une valeur seuil de température comprise entre 200°C et 300°C, de préférence d'environ 250°C.

Fig.